# EUROPEAN PATENT SPECIFICATION

(11) **EP 3 335 542 B1**
(45) Date of publication and mention of the grant of the patent: **24.02.2021**
(21) Application number: 17207011.2
(22) Date of filing: 13.12.2017
(51) Int. Cl.: A01D 87/12

(54) **BALE PROCESSING SYSTEM AND METHOD FOR REMOVING FOIL**
BALLENVERARBEITUNGSSYSTEM UND VERFAHREN ZUM ENTFERNEN VON FOLIE
SYSTÈME DE TRAITEMENT DE BALLES ET PROCÉDÉ D'ENLÈVEMENT DE FEUILLES

(30) Priority: 19.12.2016 NL 2018019
(43) Date of publication of application: 20.06.2018
(73) Proprietor: Triodor Arastirma Gelistirme Yazilim ve Bilisim Ticaret Limited Sirketi, 34852 Maltepe/Istanbul (TR)
(72) Inventor: KOORN, Maarten, 3147 PB Maassluis (NL); BAS, Cosku, 3147 PB Maassluis (NL)
(74) Representative: Octrooibureau Van der Lely N.V.

(56) References cited:
- WO-A1-96/19350
- WO-A1-2015/091377
- DE-A1- 4 322 258
- DE-U- 1 603 767
- FR-A- 939 990
- GB-A- 1 439 280
- US-A- 580 287

## Description

The present invention relates to a bale processing system for removing wrapping foil of a wrapped feed bale.

It has, in the field of agriculture, been known for long time to wrap feed bales in a wrapping foil for conserving the bales and for maintaining a good quality of feed over a certain period of time. For producing these bales, generally, the feed is first compressed in a baler, during which netting is arranged around the compressed feed. The netting thereby serves the purpose of keeping the bale in its compressed shape.

The wrapping foil is wrapped around the netting and the bale and is configured to seal off the feed from the surroundings. Compared to the strength of the netting, the wrapping foil is relatively weak. The foil thereby contributes to the compression of the bale only for a small part.

For unwrapping the bale, bale unwrapping devices are known, for example from WO 2015/091377 A1. The known unwrapping devices comprise cutting means, for cutting through the wrapping foil and the netting, and comprise wrapping material removing means, for removing the wrapping foil of the bale. The cutting means are thereby configured to at least partially penetrate the wrapped bale in order to make a cut in the wrapping foil and the netting along an outer surface of the bale, after which the removing means pull the cut wrapping from the bale.

It has been found advantageous to separately remove the wrapping foil and the netting from the bale. For example, for recycling purposes, it is convenient to separately collect the netting and the wrapping foil, as they are generally made of different materials.

However, the known unwrapping device has the disadvantage that it cuts and removes the wrapping foil and the netting at the same time, making it harder to separate them afterwards.

It is therefore an object of the invention to provide a bale processing system that lacks the above-mentioned disadvantage, or at least to provide an alternative.

The present invention provides a bale processing system for removing wrapping foil from a wrapped feed bale as claimed in claim 1.

The bale processing system according to present invention has the advantage over the known bale unwrapping devices in that the wrapping foil around the bale is intended to be cut in two passes.

First, a tear line is formed in the wrapping foil by means of the perforating member. The tear line comprises a plurality of openings in the wrapping foil, which are substantially aligned and separated from each other by means of remaining ligaments of the wrapping foil.

For forming the tear line, the perforating member is configured to form the openings in the wrapping foil. However, in order to prevent a continuous cut in the foil from occurring, the perforating member is adapted to intermittingly penetrate the wrapping foil as it is moved across the outer surface of the bale.

When penetrating the wrapping foil, the perforating member may also penetrate the bale itself and the netting in between the bale and the wrapping. The netting will then be moved aside by the perforating member, without being substantially damaged. Due to the substantially intact netting, the netting will not be loosened and the bale will maintain its compressed shape after penetration of the wrapping foil with the perforating member.

In a second pass, the pressure member is moved along the tear line to apply a pressure thereon. This pressure is aligned such, that at least a component thereof is compressive pressure that is applied normally to the outer surface of the bale.

The outer surface of the bale, and the wrapping foil and the netting around it, is thereby compressed. The outer surface of the bale underneath the tear line and the pressure member will flex inwardly due to the applied pressure, but the surrounding outer surface, which is not being loaded, will maintain its original shape.

The inward flexing of the bale underneath the tear line will cause the ligaments in between the openings in the wrapping foil to become tensioned and stretched. However, due to their relatively small thickness, they will collapse due to the applied load. Additionally, stress concentrations, following from the transition of the foil between the intact portion and the tear line, will further weaken the ligaments at the tear line.

During the second pass, with the pressure member, the wrapping foil thus becomes fully collapsed along the tear line. However, the substantially intact netting underneath the foil is stronger than the ligaments of the foil themselves. Any loading of the netting, following from the applied pressure with the pressure member, will thus have a smaller effect on the netting compared to the effect it has on the foil. The netting may thus remain intact after passage of the pressure member.

The bale processing device according to the invention may thereby fulfil the object of the invention to remove (only) the wrapping foil of a wrapped bale, while keeping the netting, and thus the (shape of the) bale, intact.

After the formation and rupture of the tear line in the wrapping foil, the foil is no longer fully covering the bale, but is split up in at least two foil portions. Due to the cut in between the foil portions, the remaining wrapping foil on the bale may be easily pulled off the bale.

In an embodiment, the perforating member is a toothed roller. The toothed roller is rotatable around an axis of rotation and comprises, along a tangential outer surface of the roller, multiple teeth. At least one row of teeth is arranged in a single plane, perpendicular to the axis of rotation. As such, it is provided that the openings in the wrapping foil become substantially aligned.

Multiple rows of teeth may be arranged on the outer surface of the roller, to enable the formation of multiple tear lines in the wrapping foil during a single pass of the toothed roller.

When the perforating member comprises multiple rows of teeth, it is advantageous to also provide a corresponding amount of pressure members, to ensure that all tear lines, formed by the perforating member, are torn.

For forming the tear line in the wrapping foil, the toothed roller may be rolled along the outer surface of the bale. By doing so, the teeth of the roller will penetrate into the bale, through the wrapping foil.

To increase their penetration, the teeth may be provided with a sharp point, with which a hole in the foil may easily be initiated. With sharp teeth, the netting underneath the opening may be easier moved aside as well.

However, the sides of the teeth are preferably blunt, so that they will be able to increase the size of the openings in the foil, but that they will not damage the netting that was moved aside.

For achieving a suitable tear line, the teeth of the roller preferably have no overlap between them. As such, seen along the perimeter of the roller, small portions of the roller are not provided with teeth. During passage of the roller along the outer surface of the bale, the position of the portions of the roller in between teeth will correspond to the position of the remaining ligaments.

According to the invention, the processing system comprises a handling device for handling the bales that are to be unwrapped by the system. The handling device is thereby configured to enable movement of an outer surface of the bale along the perforating member and/or along the pressure member. By moving the outer surface of the bale along the perforating member and the pressure member, the tear line is formed and ruptured respectively due to interaction between both members and the bale.

In case round bales are to be unwrapped, the handling devices may be adapted to enable a rolling movement of the bale, for example on traction wheels. The round outer surface may then be in contact with the wheels, but the perforating member and/or along the pressure member may also act on the rounded surface to form and rupture the tear line thereon.

In an embodiment, the pressure member is a rotatable disc with a blunt perimeter. The disc is, just like the roller, configured to be rolled along the outer surface of the bale. An axis of rotation of the disc is thereby, preferably, aligned parallel to the axis of rotation of the perforating member.

The blunt perimeter provides that the disc will not substantially penetrate the bale through the netting. As such, it is assured that the disc will solely apply the compressive pressure onto the bale and the wrapping foil, and that no cutting of the foil or the netting is caused by the disc.

To further prevent the disc from cutting the wrapping foil, the blunt perimeter of the disc may be relatively wide in a direction parallel to the axis of rotation. The stress below the disc will therefore be distributed more evenly, substantially reducing the cutting of the disc.

In an embodiment, the perforating member and the pressure member are arranged in a single cutting device.

The single cutting device is a non-handheld device, forming part of a stationary bale processing system or bale processing system that is, for example, movable by an agricultural vehicle.

In another embodiment, the perforating member comprises a drive, which is configured to rotationally drive the perforating member. For example, the drive is adapted to move the perforating member and/or the pressure member along the outer surface of the bale, which may be kept stationary, in order to form and rupture the tear line in the wrapping foil on the bale's outer surface.

Additionally, in a further embodiment, the perforating member is configured to mesh with the bale. For example by means of teeth, a traction torque, substantially parallel to the outer surface of the bale, is transmittable from the perforating member to the bale, or vice versa.

Due to the transmitted torque by meshing between the perforating member and the bale, movement of the perforating member is transformed into movement of the bale. As such, the bale is movable by means of the perforating member, without the need for the separate handling device to rotate the bale.

In case round bales are to be unwrapped, the bales may be supported by non-driven support rollers, whereas a driven rotating perforating member induces a rotation of the bale for forming and rupturing the tear line along the round outer surface of the bale.

In an embodiment, the bale processing system comprises a first winder for winding wrapping foil that is removed from the bale. After pulling of the wrapping foil, the foil may be wound around the winder for storage of the used foil.

The winder may be handheld, and the foil may be manually wound around the winder. Alternatively, the processing system may automatically wind the removed wrapping foil on the winder.

In an embodiment, the system further comprises a cutter. The cutter is configured to cut netting of the bale, in order to allow for the removal of the netting from the bale, after the wrapping foil has been removed.

For example, the cutter may be a conventional knife that penetrates into the bale, and through the netting accordingly. Upon relative movement between the bale and the knife, the netting around the bale may be cut, after which it can be removed from the bale.

The system may comprise a second winder for winding netting that is removed from the bale. By providing a separate winder for winding the netting on, the removed wrapping foil and the removed netting are wound on different winders, providing for easier separation between them and, accordingly, improved recycling efficiency of the foil and the netting.

In an embodiment, the bale processing system may, in particular in case of an at least partly automated system comprise a bale supply, for supplying wrapped feed bales to the processing system.

With the bale supply, the system may be able to pick-up bales and to position them near the cutting device to allow for reliable and accurate cutting of the wrapping and, in a further embodiment, of the netting as well. Additionally, labour-intensive work, like positioning the bales in the system, may no longer be required with the provision of the bale supply.

The bale supply may comprise a lifting device, for lifting the bales into the system and may further comprise a hopper for storage of bales that are to be unwrapped, so as to provide a continuous feed of bales towards the cutting device.

The processing system may, in a further embodiment, also comprise a shredder for the shredding of the unwrapped feed bales. This would be convenient, in particular when the bales were to be used to feed animals, after unwrapping. The shredding would save time, and would, incorporated with the processing system, consume less space. As a further advantage, the unwrapped bales do no longer have to be handled in their entirety, as they are shredded right after unwrapping.

The invention further provides a method for removing wrapping foil from a wrapped feed bale, comprising the steps of:
- forming a tear line in the wrapping foil with a perforating member,
- applying pressure onto the tear line with a pressure member for tearing the wrapping foil along the tear line, and
- removing the wrapping foil from the bale.

With the method according to the invention, the wrapping foil around the bale may be cut, but the netting, providing structural integrity to the bale, will remain intact.

The method according to the invention may be carried out by means of a manual perforating member and a manual pressure member. The method may also be performed by means of an automated bale processing system.

In an embodiment, the method further comprises the step of winding the wrapping foil that is removed from the bale with a first winder. The removed wrapping foil of multiple bales may then be accumulated and discharged afterwards.

In a further embodiment, the method comprises the steps of cutting, after the wrapping foil has been removed from the bale, the netting of the bale with cutting means, and winding the netting that is removed from the bale with a second winder.

As such, the netting of multiple bales may be accumulated as well, in order to be discharged afterwards as well, separated from the removed wrapping foil.

Further characteristics and advantages of the bale processing system according to the invention will be explained in more detail below with reference to embodiments, which are illustrated in the appended drawings, in which:
- Figure 1 schematically depicts an embodiment of the bale processing system according to the invention,
- Figure 2A schematically depicts a perforating member of the system, forming a tear line in a piece of wrapping foil,

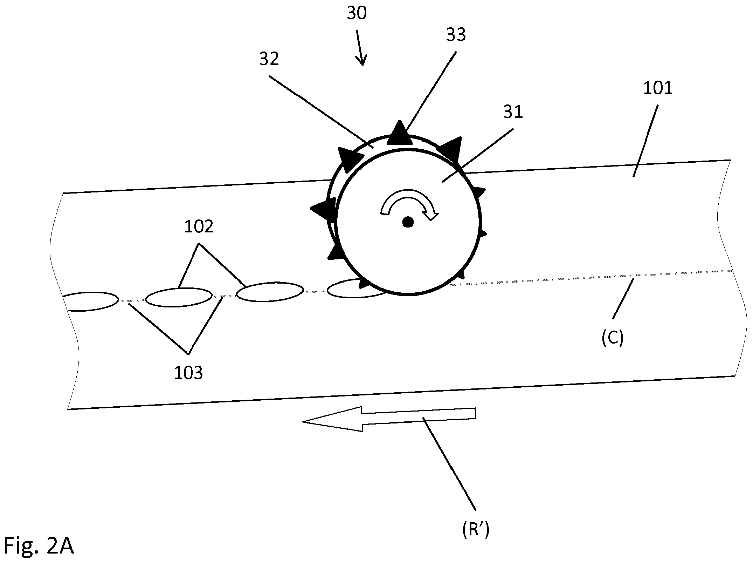

- Figure 2A schematically depicts a pressure member of the system, tearing a tear line in the piece of wrapping foil, and

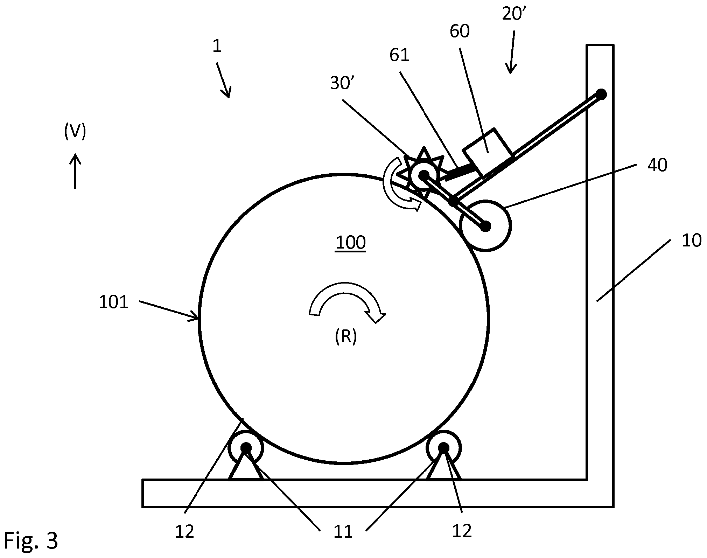

- Figure 3 schematically depicts an alternative embodiment of the bale processing system according to the invention.

Throughout the figures, the same reference numerals are used to refer to corresponding components or components which have a corresponding action.

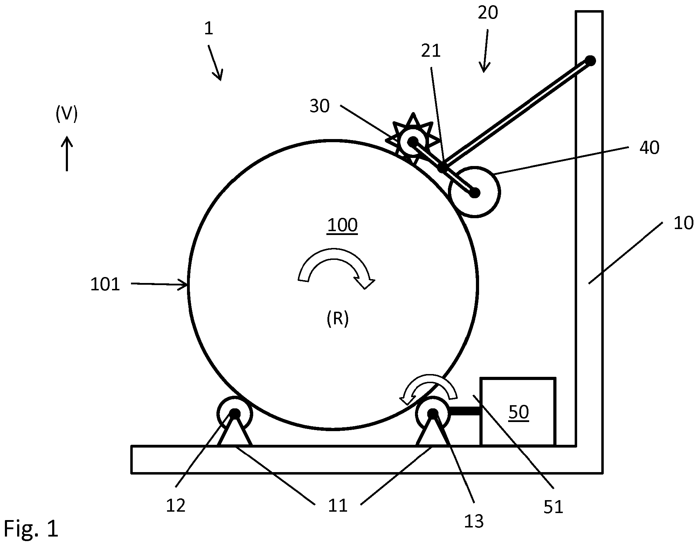

In figure 1, an embodiment of the bale processing system according to the present invention is schematically displayed, denoted by reference numeral 1. The bale processing system 1 is configured to remove wrapping foil 101 that is wrapped around an outer surface of a round feed bale 100.

In other embodiments, the system may be configured to remove wrapping foil from wrapped rectangular bales.

The system 1 comprises a frame element 10, with which various components of the system 1 are linked together. Onto a bottom portion of the frame element 10, two brackets 11 are mounted. A position of each of the brackets 11 may be adaptable, to enable the system 1 to receive multiple types and/or sizes of bales.

A support roller 12, 13 is rotatably mounted to each of the brackets 11. The support rollers 12, 13 are aligned such, that their axes of rotation extend parallel to each other. The bale 100 is arranged on the support rollers 12, 13, such that it is supported by the rollers 12, 13 in a vertical direction (V) and that rotation of the bale 100 is enabled round an axis that is parallel to the axes of rotation of the support rollers 12, 13.

In an alternative embodiment, the bale may be arranged on a fixed support, which is also configured to vertically support the bale, but will not enable rotation of the bale. In particular in case of a manually operated system, this embodiment with fixed supports is convenient, as a safe workplace may be created, reducing the risk of a bale rolling away.

The frame element 10 further comprises a portion that extends upwards, substantially in the vertical direction (V). Onto the upwards portion of the frame element 10, a cutting device 20 is mounted, which is configured to cut the wrapping foil 101 of the bale 100.

In the present embodiment, the cutting device 20 is mounted to the frame element 10 by means of a rotatable connection 21. A rotational position of the cutting device 20 may thus be changed with respect to the frame element 10, whereas a relative displacement between the cutting device 20 and the frame element 10 is not allowed.

In alternative embodiments, the cutting device 20 may be mounted to the frame element 10 by means of a different type of connection with which, for example by means of actuators, relative movement with more degrees of freedom between the frame element and the cutting device may be enabled.

A perforating member 30, for forming a tear line in the wrapping foil 101 of the bale 100 is mounted on one end of a first bracket 21 of the cutting device 20. The perforating member 30 is rotatable with respect to the bracket 21 and is, at least during the forming of the tear line in the wrapping foil 101, pressed against the outer surface of the bale 100.

On another end of the first bracket 21, a pressure member 40 is rotatably mounted for applying pressure onto the tear line, to induce rupture thereof.

In the present embodiment, the cutting device 20, with the perforating member 30 and the pressure member 40 mounted thereon, are pressed against the outer surface of the bale 100 with a gravitational force, induced by its own weight.

In alternative embodiments, the perforating member and the pressure member may additionally be pressed against the outer surface of the bale by means of an actuator or spring element, to increase the downwards force that acts on the cutting device.

The system 1 further comprises a handling device 50, which is configured to rotationally move the bale 100. The handling device 50 is thereto connected to a driven support roller 13 by means of a drive shaft 51.

The handling device is 50 is configured to generate a rotational movement and is further configured to transmit this rotation, through the drive shaft 51, towards the driven support roller 13. Since the bale 100 is, amongst others, arranged on the driven support roller 13, rotational movement of the driven support roller 13 is converted into a rotation of the bale 100.

In figure 1, the direction of the rotation (R) of the bale 100 is displayed by an arrow. It can be seen that, with this rotational direction, the wrapping foil 101 on the outer surface first moves past the perforating member 30 and moves past the pressure member 40 thereafter.

The handling device 50 in the present embodiment is an electric motor. However, in alternative embodiments, a hydraulic motor or other type of actuator, configured to induce rotational movement, may be used. As an alternative to the direct coupling with the drive shaft 51 between the handling device 50 and the driven support roller 13, the handling device may be integrated with the driven support roller. As such, a more compact and/or durable system may be achieved.

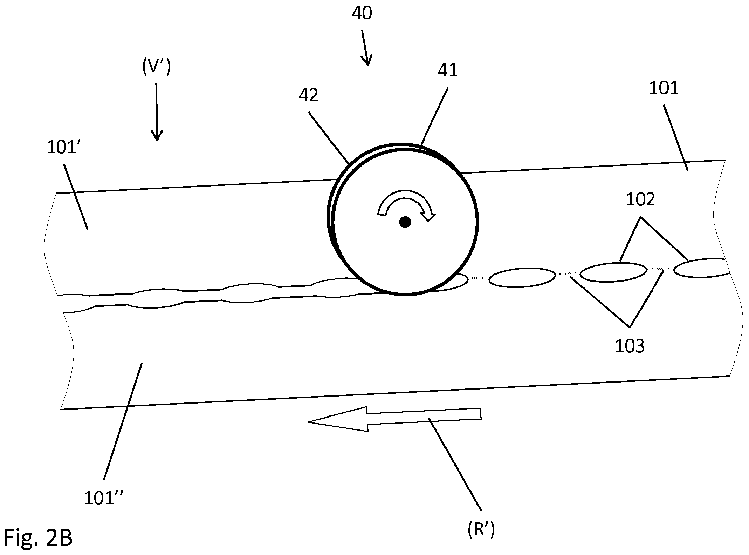

In figures 2A and 2B, the cutting of the wrapping foil 101 is schematically displayed. In figure 2A, a piece of wrapping foil 101 is displayed in which a cut is to be made along a (virtual) cutting line (C).

In figure 2A, the perforating member 30 is displayed, during the forming of a tear line in the wrapping foil 101. In figure 2B, the pressure member 40 is displayed, during the tearing of the tear line. In the embodiment displayed in the figures, the perforating member 30 and the pressure member 40 are kept stationary, while the bale with the wrapping foil 101 is moved with respect to the members 30, 40, referred to by an arrow (R').

In the embodiment, the perforating member 30 is a roller 31, which is rotatable around an axis perpendicular to the cutting line (C). The roller 31 is a cylindrical element, having a constant, circular cross section along its axis of rotation. On a tangential outer surface 32 of the roller 31, teeth 33 are provided, which are intended to penetrate the wrapping foil 101.

In the present embodiment, the roller 31 is displayed as a solid disk. It may be understood that, in alternative embodiments, the roller may be a hollow part.

With its teeth 33, the perforating member 30 is configured to form openings 102 in the wrapping foil 101 along the cutting line (C). The openings 102 are separated from each other by remaining ligaments 103 of foil in between them.

The teeth 33 of the perforating member 30 are aligned substantially parallel to each other in a plane perpendicular to the axis of rotation of the member 30. As such, the openings 103 in the wrapping foil 101 are formed along a substantially straight line (C), aligned with the plane of the teeth 33.

During forming of the openings 102, first, a sharp point of the tooth 33 is brought into contact with the foil. The sharp point is thereby configured to form a small hole in the foil 101. As the tooth 33 of the perforating member 30 further penetrates the foil 33, the tooth 33 widens and it stretches the hole in the foil to form the opening 102 of the tear line.

Side portions of the tooth 33 are relatively blunt, so the widening of the hole is mainly achieved by stretching the foil 101, rather than by a cutting action. This will have the advantage that netting of the bale 100, which is present underneath the foil 101, around the bales outer surface, will not be damaged. The sharp point of the tooth 33 may penetrate in a wire of the netting, but adjacent wires may remain undamaged. As such, the netting of the bale 100, and thus its shape, will remain intact.

Since the teeth 33 are not continuously disposed around the circumference of the perforating member 30, the wrapping foil 101 will not be penetrated along the entire cutting axis (C). The parts of the roller 31, in between teeth 33, will not penetrate the foil 101. At those parts, the remaining ligaments 103 are formed.

In figure 2B, the pressure member 40 is displayed during the tearing of the tear line in the foil 101. Similarly to the perforating member 30, the pressure member 40 is rotatable around an axis that is perpendicular to the cutting axis (C).

During movement of the wrapping foil 101 underneath the pressure member 40, the pressure member 40 is configured to apply a force on the tear line, in a downwards direction V').

Feed bales are generally flexible, so, as a result of the pressure exerted by the pressure member 40, the bale 100 will be slightly compressed underneath the pressure member 40. Portions of the bale 100 adjacent the pressure member 40 will however remain uncompressed since no pressure is exerted there.

The foil 101, and in particular the remaining ligaments 103 between the openings 102 of the tear line, will be stretched as it extends between the compressed portion of the bale 100 and the uncompressed portion of the bale 100.

By applying sufficient pressure with the pressure member 40, the stretching of the ligaments 103 will become sufficiently large to cause rupture of the ligaments 103. As such, the ligaments 103 of the tear line are torn apart and the wrapping foil 101 becomes separated in two foil portions 101', 101". After passing underneath the pressure member 40, the foil portions 101', 101" may be easily pulled apart for removing them from the bale 100.

The netting underneath the foil 101 is stronger than the foil 101 itself, and will suffer less from the stretching that follows from the locally applied pressure of the pressure member 40. The netting will not become ruptured and will remain intact after passage of the foil underneath the pressure member 40.

In the present embodiment, the pressure member 40 is a disc 41, which is rotatable around an axis that is parallel to the rotational axis of the perforating member 30. The disc 41 has, in a plane perpendicular to the axis, a circular cross section.

The disc 41 comprises a blunt perimeter 42 that is configured to become in contact with the ligaments 103 of the wrapping foil 101. With blunt, it is meant that the disc 41 will not be sharp, in order to prevent cutting of the foil 101 and of the netting of the bale 100 underneath the foil 101. A blunt perimeter 42 of the disc 41 may be achieved by making the disc 41 relatively wide along its axis of rotation.

In figure 3, an alternative embodiment of the system 1 is displayed. This alternative embodiment comprises, just as the embodiment in figure 1, a frame element 10 and two brackets 11 that are mounted on the frame element 10. The embodiment in figure 3 comprises two support rollers 12, which are rotatably mounted to the brackets 11. Both support rollers 12 are not directly driven, since no handling device is provided, but are configured to support the bale 100 and to enable the bale 100 to be rotated.

The cutting device 20' comprises a drive 60, which is configured to rotationally drive the perforating member 30' through a drive shaft 61. Teeth of the perforating member 30' mesh with the bale 100 during forming and tearing of the tear line in the wrapping foil 101. As a result of the meshing teeth, a torque is transmittable from the drive 60, through the drive shaft 61 and the perforating member 30', to the bale 100. As such, rotational movement of the perforating member 30' may be transformed into rotation of the bale 100.

## Claims

1. A bale processing system (1) for removing wrapping foil (101) from a wrapped feedbale (100), comprising:
- a handling device (50, 60), and
- a perforating member (30, 30'), **characterized in that** the perforating member is configured to form a tear line in the wrapping foil (101), that the system comprises
- a pressure member (40) for applying pressure onto the tear line to tear the wrapping foil (101) along the tear line,
and that the handling device (50, 60) is configured to enable movement of an outer surface of the bale (100) along the perforating member (30, 30') and/or the pressure member (40).

2. Bale processing system (1) according to claim 1, wherein the perforating member (30, 30') is a toothed roller.

3. Bale processing system (1) according to claim 1 or 2, wherein the pressure member (40) is a rotatable disc (41) with a blunt perimeter (42).

4. Bale processing system (1) according to any of the preceding claims, wherein the perforating member (30, 30') comprises a drive (60), configured to rotationally drive the perforating member (30, 30').

5. Bale processing system (1) according to claim 4, wherein the perforating member (30, 30') is configured to mesh with the bale (100), such that rotational movement of the perforating member (30, 30') is transformed into movement of the bale (100) and vice versa.

6. Bale processing system (1) according to any of the claims 1 - 5, wherein the perforating member (30, 30') and the pressure member (40) are arranged in a single cutting device.

7. Bale processing system (1) according to claim 6, wherein the cutting device is movable along the outer surface of the bale (100).

8. Bale processing system (1) according to any of the preceding claims, wherein a tangential direction of the perforating member (30, 30') is aligned with a tangential direction of the pressure member (40), along the cutting direction.

9. Bale processing system (1) according to any of the preceding claims, comprising a first winder for winding wrapping foil (101) that is removed from the bale (100).

10. Bale processing system (1) according to any of the preceding claims, comprising a cutter, for cutting netting of the bale (100).

11. Bale processing system (1) according to claim 10, comprising a second winder for winding netting that is removed from the bale (100).

12. Bale processing system (1) according to any of the preceding claims, further comprising:
- a bale supply, for supplying wrapped feed bales (100) to the processing system (1), and/or
- a shredder, for shredding the unwrapped feed bales (100).

13. Method for removing wrapping foil (101) from a wrapped feed bale (100), comprising the steps of:
- forming a tear line in the wrapping foil (101) with a perforating member (30),
- applying pressure onto the tear line with a pressure member (40) for tearing the wrapping foil (101) along the tear line, and
- removing the wrapping foil (101) from the bale (100).

14. Method according to claim 13, comprising the step of winding the wrapping foil (101) that is removed from the bale (100) with a first winder.

15. Method according to claim 13 or 14, comprising the steps of:
- cutting, after the wrapping foil (101) has been removed from the bale (100), the netting of the bale (100) with cutting means, and
- winding the netting that is removed from the bale (100) with a second winder.

## Patentansprüche

1. Ballenverarbeitungssystem (1) zum Entfernen von Wickelfolie (101) von einem eingewickelten Futterballen (100), umfassend:
- eine Handhabungsvorrichtung (50, 60) und
- ein perforierendes Element (30, 30'), **dadurch gekennzeichnet, dass** das perforierende Element dazu ausgelegt ist, eine Reißlinie in der Wickelfolie (101) zu bilden, und dass das System Folgendes umfasst:
- ein Druckelement (40) zum Ausüben von Druck auf die Reißlinie, um die Wickelfolie (101) entlang der Reißlinie aufzureißen,
und dass die Handhabungsvorrichting (50, 60) dazu ausgelegt ist, eine Bewegung einer Außenfläche des Ballens (100) entlang dem perforierenden Element (30, 30') und/ oder dem Druckelement (40) zu ermöglichen.

2. Ballenverarbeitungssystem (1) nach Anspruch 1, wobei das perforierende Element (30, 30') eine mit Zähnen versehene Walze ist.

3. Ballenverarbeitungssystem (1) nach Anspruch 1 oder 2, wobei das Druckelement (40) eine drehbare Scheibe (41) mit einem stumpfen Umfang (42) ist.

4. Ballenverarbeitungssystem (1) nach einem der vorhergehenden Ansprüche, wobei das perforierende Element (30, 30') einen Antrieb (60) umfasst, der dazu ausgelegt ist, das perforierende Element (30, 30') auf rotierende Weise anzutreiben.

5. Ballenverarbeitungssystem (1) nach Anspruch 4, wobei das perforierende Element (30, 30') dazu ausgelegt ist, auf eine solche Weise mit dem Ballen (100) einzugreifen, dass die Rotationsbewegung des perforierenden Elements (30, 30') in eine Bewegung des Ballens (100) und umgekehrt umgewandelt wird.

6. Ballenverarbeitungssystem (1) nach einem der Ansprüche 1 bis 5, wobei das perforierende Element (30, 30') und das Druckelement (40) in einer einzigen Schneidvorrichtung angeordnet sind.

7. Ballenverarbeitungssystem (1) nach Anspruch 6, wobei die Schneidvorrichtung entlang der Außenfläche des Ballens (100) bewegbar ist.

8. Ballenverarbeitungssystem (1) nach einem der vorhergehenden Ansprüche, wobei eine tangentiale Richtung des perforierenden Elements (30, 30') entlang der Schneidrichtung in einer Linie mit einer tangentialen Richtung des Druckelements (40) ausgerichtet ist.

9. Ballenverarbeitungssystem (1) nach einem der vorhergehenden Ansprüche, umfassend eine erste Aufwickelvorrichtung zum Aufwickeln der Wickelfolie (101), die von dem Ballen (100) entfernt wird.

10. Ballenverarbeitungssystem (1) nach einem der vorhergehenden Ansprüche, umfassend einen Schneider zum Aufschneiden des Netzes des Ballens (100).

11. Ballenverarbeitungssystem (1) nach Anspruch 10, umfassend eine zweite Aufwickelvorrichtung zum Aufwickeln des Netzes, das von dem Ballen (100) entfernt wird.

12. Ballenverarbeitungssystem (1) nach einem der vorhergehenden Ansprüche, ferner umfassend:
- eine Ballenzuführung, um dem Verarbeitungssystem (1) eingewickelte Futterballen (100) zuzuführen, und/oder
- einen Häcksler, um die ausgewickelten Futterballen (100) zu häckseln.

13. Verfahren zum Entfernen von Wickelfolie (101) von einem eingewickelten Futterballen (100), umfassend die folgenden Schritte:
- Bilden einer Reißlinie in der Wickelfolie (101) mit einem perforierenden Element (30),
- Ausüben von Druck auf die Reißlinie mit einem Druckelement (40), um die Wickelfolie (101) entlang der Reißlinie aufzureißen, und
- Entfernen der Wickelfolie (101) von dem Ballen (100).

14. Verfahren nach Anspruch 13, umfassend den Schritt des Aufwickelns der Wickelfolie (101), die mit einer ersten Aufwickelvorrichtung von dem Ballen (100) entfernt wird.

15. Verfahren nach Anspruch 13 oder 14, umfassend die folgenden Schritte:
- Aufschneiden des Netzes des Ballens (100) mit einem Schneidmittel, nachdem die Wickelfolie (101) von dem Ballen (100) entfernt worden ist, und
- Aufwickeln des Netzes, das von dem Ballen (100) entfernt wird, mit einer zweiten Aufwickelvorrichtung.

## Revendications

1. Système de traitement de balles (1) pour éliminer une feuille d'emballage (101) d'une balle d'alimentation emballée (100), comprenant :
- un dispositif de manipulation (50, 60), et
- un élément de perforation (30, 30'), **caractérisé en ce que** l'élément de perforation est configuré pour former une ligne de déchirure dans la feuille d'emballage (101), **en ce que** le système comprend :
- un élément de pression (40) pour appliquer de la pression sur la ligne de déchirure afin de déchirer la feuille d'emballage (101) le long de la ligne de déchirure,
et **en ce que** le dispositif de manipulation (50, 60) est configuré pour permettre un mouvement d'une surface externe de la balle (100) le long de l'élément de perforation (30, 30') et/ou de l'élément de pression (40).

2. Système de traitement de balles (1) selon la revendication 1, dans lequel l'élément de perforation (30, 30') est un rouleau denté.

3. Système de traitement de balles (1) selon la revendication 1 ou 2, dans lequel l'élément de pression (40) est un disque rotatif (41) ayant un périmètre émoussé (42).

4. Système de traitement de balles (1) selon l'une quelconque des revendications précédentes, dans lequel l'élément de perforation (30, 30') comprend un entraînement (60), configuré pour entraîner en rotation l'élément de perforation (30, 30').

5. Système de traitement de balles (1) selon la revendication 4, dans lequel l'élément de perforation (30, 30') est configuré pour s'engrener avec la balle (100), de telle sorte qu'un mouvement de rotation de l'élément de perforation (30, 30') soit transformé en un mouvement de la balle (100) et vice versa.

6. Système de traitement de balles (1) selon l'une quelconque des revendications 1 à 5, dans lequel l'élément de perforation (30, 30') et l'élément de pression (40) sont agencés dans un dispositif de coupe unique.

7. Système de traitement de balles (1) selon la revendication 6, dans lequel le dispositif de coupe est mobile le long de la surface externe de la balle (100).

8. Système de traitement de balles (1) selon l'une quelconque des revendications précédentes, dans lequel une direction tangentielle de l'élément de perforation (30, 30') est alignée avec une direction tangentielle de l'élément de pression (40), le long de la direction de coupe.

9. Système de traitement de balles (1) selon l'une quelconque des revendications précédentes, comprenant un premier enrouleur pour enrouler la feuille d'emballage (101) qui est éliminée de la balle (100).

10. Système de traitement de balles (1) selon l'une quelconque des revendications précédentes, comprenant un couteau, pour couper un filet de la balle (100).

11. Système de traitement de balles (1) selon la revendication 10, comprenant un deuxième enrouleur pour enrouler un filet qui est éliminé de la balle (100).

12. Système de traitement de balles (1) selon l'une quelconque des revendications précédentes, comprenant en outre :
- une alimentation en balles, pour alimenter le système de traitement (1) en balles d'alimentation emballées (100), et/ou
- une déchiqueteuse, pour déchiqueter les balles d'alimentation déballées (100).

13. Procédé pour éliminer une feuille d'emballage (101) d'une balle d'alimentation emballée (100), comprenant les étapes suivantes :
- la formation d'une ligne de déchirure dans la feuille d'emballage (101) avec un élément de perforation (30),
- l'application de pression sur la ligne de déchirure avec un élément de pression (40) pour déchirer la feuille d'emballage (101) le long de la ligne de déchirure, et
- l'élimination de la feuille d'emballage (101) de la balle (100).

14. Procédé selon la revendication 13, comprenant l'étape d'enroulement de la feuille d'emballage (101) qui est éliminée de la balle (100) avec un premier enrouleur.

15. Procédé selon la revendication 13 ou 14, comprenant les étapes suivantes :
- la coupe, après que la feuille d'emballage (101) ait été éliminée de la balle (100), du filet de la balle (100) avec des moyens de coupe, et
- l'enroulement du filet qui est éliminé de la balle (100) avec un deuxième enrouleur.
